# EUROPÄISCHE PATENTSCHRIFT

(11) **EP 0 351 493 B1**
(45) Veröffentlichungstag und Bekanntmachung des Hinweises auf die Patenterteilung: **18.08.1993**
(21) Anmeldenummer: 89106090.7
(22) Anmeldetag: 07.04.1989
(51) Int. Cl.: E21B 10/44, E21B 10/58, E21B 10/36, B27C 3/00, B28D 1/14

(54) **Steinbohrer**
Stone drill bit
Foret pour la pierre

(30) Priorität: 19.07.1988 DE 8809225 U
(43) Veröffentlichungstag der Anmeldung: 24.01.1990
(73) Patentinhaber: Kretsch, Detlev, D-53489 Sinzig (DE)
(72) Erfinder: Kretsch, Detlev, D-53489 Sinzig (DE)
(74) Vertreter: Hentschel, Peter, Dipl.-Ing.

(56) Entgegenhaltungen:
- DE-A- 3 538 191
- US-A- 1 746 046
- US-A- 1 747 117
- US-A- 2 294 969
- US-A- 2 570 945
- US-A- 2 876 995
- V.D.I.-ZEITSCHRIFT, Band 126, Nr. 14, Juli 1984, Seite 529, Düsseldorf, DE; "Spiralbohrer, Kurzstufenbohrer"

## Beschreibung

Die Erfindung betrifft einen Steinbohrer, insbesondere für Schlagbohrmaschinen, der als Spiralbohrer ausgebildet und mit Hartmetall-Schneiden ausgerüstet ist, nach dem Ober begriff des Anspruches 1.

Ein derartiger Bohrer ist z.B. aus der DE-A-3 538 191 bekannt.

Hartmetall-Schneiden einerseits und immer perfekter konstruierte Schlagbohrmaschinen andererseits haben dazu geführt, daß im Bauwesen und in der Bausanierung das Befestigen von Gegenständen aus mauerwerksfremden Werkstoffen zur Routine geworden ist. Maßgebend an dieser Entwicklung beteiligt ist aber auch die Perfektionierung der Dübel, die aus Kunststoff bestehen und inzwischen so perfektioniert sind, daß sie auch für Schlagverschraubung geeignet sind.

Ein besonderes Gebiet des Innenausbaues von Räumen, stellt die Auskleidung des Mauerwerkes mit Platten, Paneelen o.dgl. dar. Die diversen Aufgaben der Schalldämmung, Wärmedämmung, Hinterlüftung und dgl. erfordern eine sogenannte Konterlattung. Beim Ausbau von Deckenverkleidungen, werden Schattenleisten gesetzt und vieles andere mehr. Die letztgenannten Latten, Leisten usw. haben vergleichsweise schwach Querschnitte; zum Teil sind sie nur ein bis zwei Zentimeter stark.

Bei den genannten Arbeiten wird der Steinbohrer der eingangs genannten Art in eine Schlagbohrmaschine eingespannt, und zum Andübeln der jeweiligen Latte oder Leiste wird durch das Holz hindurch mit dem Steinbohrer in das Mauerwerk gebohrt. Anschließend wird ebenfalls durch das Holz hindurch der Dübel eingeschlagen, anschließend die Schraube.

In der Praxis kommt es bei dieser Arbeitsweise zu Behinderungen. Nur dann, wenn das Holz der erwähnten Latten oder Leisten ausgetrocknet und abgelagert ist und zugleich der Steinbohrer nahezu neu und scharf ist, lassen sich etwa 80 % der Dübel problemlos setzen. Bei etwa 20 % klemmt der Dübel im Holz, weitet sich und faltet sich, wenn er eingeschlagen wird, so daß ein Auswechseln, ggfs. Nachbohren erforderlich ist. Dieses Verhältnis einwandtfrei setzbarer Dübel zu der Anzahl nachzusetzender, beim Einschlagen beschädigter Dübel wird aber während des Arbeitens zunehmend schlechter. Schließlich kommt es dazu, daß 50 % der Dübel beim Einschlagen zerstört werden.

Der Grund dafür besteht darin, daß das Bohrwerkzeug ein Steinbohrer ist, der mit einer Schlagbohrmaschine angetrieben wird. Auch Hartmetall-Schneiden bleiben nicht unbegrenzt scharf. Sie schneiden bzw. bohren aber in Mauerwerk, Beton und dgl. weiterhin mit befriedigender Leistung, weil zusätzlich zum Drehantrieb die Schlagwirkung der Schlagbohrmaschine zur Geltung kommt.

Während für Stein stumpfwinklige Schneiden erforderlich sind, benötigt man zum Schneiden von Holz schlanke, spitzwinklige Schneiden, die auch bei Anwendung der Schlagwirkung -Stemmeisen, Stechbeitel usw.- scharf sein müssen. Die Hartmetall-Schneiden erfüllen diese Erfordernisse schon im neuen Zustand nicht, denn sie sind stumpfwinklig; eine Schneidwirkung in Holz kann daher nur unvollkommen auftreten und auch nur so lange wie Hartmetall-Schneiden für Stein noch fabrikneu, scharf oder nachgeschärft sind. So kommt es in der Praxis dazu, daß sich der Steinbohrer bei den genannten Arbeiten unter Ausnutzung der Nachgiebigkeit von Holz mehr oder weniger durch das Holz quetscht und die Holzfasern seitlich verdrängt, als sie zu durchschneiden. Es tritt der gleiche Effekt ein, als würde ein Nagel durch Holz geschlagen oder eine Holzschraube in das Holz eingedreht. Die dem Werkstoff Holz innenwohnende Strukturelastizität führt nach dem Herausziehen des Steinbohres dazu, daß sich das nur überwiegend in das Holz gequetschte Loch mehr oder weniger weit wieder schließt. Zum Einschlagen der Dübel sind die verbleibenden Loch-Restquerschnitte zu klein, und so kommt es zu den genannten Behinderungen.

Es ist leicht einzusehen, daß schlecht abgelagertes oder feuchtes oder auf einer Baustelle feucht gewordenes Holz noch viel empfindlicher reagiert, so daß die geschilderten Nachteile in erheblich stärkerem Umfange auftreten.

Der Praktiker behilft sich in dieser Situation in der Regel damit, daß die Bohrmaschine während des Bohrens im Bohrloch leicht kreisend bewegt wird -wringen-. Auf diese Weise soll das Loch im Holz geweitet werden. Diese Abhilfe ist zeitraubend und umständlich. Besonders ist sie aber nachteilig für die Festigkeit der Dübel im Untergrund, denn das "Wringen" erweitert auch das Dübelloch im Untergrund, d.h. Mauerwerk, Beton, Stein, o.dgl., so daß der gesetzte Dübel unter Umständen nicht den nötigen Halt findet.

Ausgehend von diesem bekannten Stand der Technik liegt der Erfindung die Aufgabe zugrunde, einen Steinbohrer der eingangs genannten Art so weiterzubilden, daß er beim beschriebenen Andübeln von Leisten aus Holz oder anderen elastisch nachgiebigen oder quellfähigen oder faserigen Werkstoffen Löcher schneidet, die ein problemloses Einschlagen der Dübel in den Untergrund gestatten.

Zur Lösung der vorgenannten Aufgabe kennzeichnet sich der eingangs genannte Steinbohrer erfindungsgemäß dadurch, daß der Bohrer im Anschluß an die Hartmetall-Schneiden einen, ggfs. gegenüber den Hartmetall-Schneiden mit geringerem Durchmesser ausgebildeten Steinbohrteil aufweist, daß zwischen dem Steinbohrteil und einem Einspannende ein Holzschneidteil vorgesehen ist, und daß der Holzschneidteil gegenüber dem Durchmesser der Hartmetall-Schneiden um ca. 8-24% im Durchmesser vergrößert ist.

Der Grundgedanke der Erfindung besteht darin, den Steinbohrer in einer Raumform auszubilden, die einen ersten, für Stein geeigneten Abschnitt und einen zweiten, für Holz geeigneten Abschnitt aufweist. Es besteht so die Möglichkeit, die schneidenden Teile des Steinbohrteiles in allen Einzelheiten den Bedürfnissen zum Bohren von Stein anzupassen und die schneidwirksamen Teile des Holzschneidteiles spezifischer den Bedürfnissen zum Bohren in Holz anzupassen. Da aber beim Bohren von Stein körniger Bohrabfall entsteht, der aus dem Bohrloch heraustritt, ist es unvermeidlich, daß die Schneidschärfe im Holzschneidteil beim Gebrauch beeinträchtigt werden muß. Aus diesem Grunde ist erfindungsgemäß weiterhin vorgesehen, daß der Holzschneidteil im Durchmesser um etwa 8 - 24% gegenüber dem Durchmesser der Hartmetall-Schneiden des Steinbohrteiles vergrößert ist.

Bei der Benutzung des neuen Steinbohres tritt im neuen Zustand eine sehr gute Schneidwirkung des Holzschneidteiles im Holz ein. Sobald die Schneidwirkung des Holzschneidteiles aufgrund der Abstumpfung nachläßt, wirkt sich der vergrößerte Durchmesser des Holzschneidteiles aus, indem er zusätzlich zum nachlassenden Schneideffekt eine Quetschwirkung auf das umgebende Holz ausübt. Die Kombination von Schneid- und Quetschwirkung sorgt auch bei lange benutztem Steinbohrer gem. der Erfindung dafür, daß selbst bei naß gewordenem Holz zuverlässig angedübelt werden kann. Es hat sich gezeigt, daß auch nach längerem Gebrauch des Steinbohres und beim Andübeln von nassem Holz ohne Wringen noch wenigstens 80% der Dübel einwandfrei gesetzt werden können.

Dieser Erfolg ist mit einer erheblichen Zeiteinsparung und Qualitätsverbesserung verbunden, denn durch Vermeidung des Wringens wird Zeit eingespart und die Haltbarkeit der Dübel im Mauerwerk verbessert. Ein nicht unbeträchtlicher Vorteil ergibt sich auch daraus, daß erheblich weniger Dübel beim Einschlagen zerstört werden.

Der erfindungsgemäß ausgebildete Steinbohrer eignet sich naturgemäß auch für andere Werkstoffe als Holz. Er hat seine Vorteile immer dann, wenn Werkstoffe an Mauerwerk befestigt werden müssen, die aufgrund innerer Elastizität oder Quellungseigenschaften und von Stein, Mauerwerk, Beton o.dgl. abweichender Schneidbedingungen dazu neigen, ein frischgebohrtes, ggfs. durch Quetschen oder Verdrängen erzeugtes Loch mehr oder weniger weit zu schließen. Derartige Werkstoffe können Fasermatten, Gummi-oder Kuntstoffmatten und vieles andere mehr sein.

Bei der Weiterbildung nach Anspruch 2 hat der Steinbohrer eine auch durch den Holzschneidteil stetig weiterverlaufende Spiralnutung. Diese Maßnahme ist deswegen von Vorteil, weil sich dadurch ein ständiges Auswerfen des Bohrabfalles sichern läßt.

Bei der Weiterbildung nach Anspruch 3 ist an der übergangsstelle vom Steinbohrteil in den Holzschneidteil ein Hartmetall-Schneideinsatz vorgesehen, dessen Hartmetall-Schneiden einen stumpfen Winkel bilden. Die Hartmetall-Schneideinsätze schützen einerseits die anschließenden Holzschneiden vor Abstumpfung, und andererseits schaffen sie aufgrund ihrer im stumpfen Winkel verlaufenden Stirnschneiden eine konische Erweiterung am Eingang des im Mauerwerk gebohrten Loches. Diese konische Erweiterung erleichtert das Einschlagen des Dübels in erheblichem Umfange.

Damit die Bohrlochtiefe und das konische Erweitern der Bohrung im Mauerwerk exakt hergestellt werden können, ist gemäß Anspruch 4 vorgesehen, daß der Steinbohrer am Ende des Holzschneidteiles und vor seinem Einspannende einen ggfs. axial verschiebbaren und arretierbar ausgebildeten Anschlagring als Bohrtiefenbegrenzer aufweist -Anspruch 4-. Solche Anschlagringe können bei einheitlichem Arbeiten auf Baustellen fest am Steinbohrer angebracht sein. Sie können aber für universell verwendbare Steinbohrer einstellbar sein.

Gemäß Anspruch 5 ist der Steinbohrer dadurch weitergebildet,daß der Holzschneidteil Flankenschneiden aufweist,und daß die Schneidkanten der Flankenschneiden in der gedachten Zylindermantel-Fläche des um 8-24% im Durchmesser vergrößerten Holzschneidteiles liegen.

Steinbohrer haben bekanntlich Stirnschneiden; das gleiche gilt in der Regel für Holzbohrer. Da der Steinbohrer gemäß der Erfindung aber sowohl Holz, wie auch Stein schneiden muß, wird bei der Weiterbildung gemäß Anspruch 5 die an sich negative Eigenschaft des Werkstoffes Holz, nämlich elastisch nachzugeben, zu quellen, ausgenutzt, um einen Schneideffekt zu ermöglichen. Dadurch nämlich, daß die Flankenschneiden Schneidkanten haben, die in der gedachte Zylindermantelfläche der 8-24% im Durchmesser vergrößerten Holzschneidteiles liegen, während das übrige Material des Holzschneidteiles im wesentlichen einen geringeren Durchmesser hat, tendiert das Holz zum Zurückdrücken. In das Bohrloch zurückquellendes Holz durchsetzt aber die gedachte Zylindermantelfläche und kann daher von den Flankenschneiden bzw. Schneidkanten geschnitten werden. So wird die an sich negative Eigenschaft des Werkstoffes Holz vorteilhaft ausgenutzt, um beim Andübeln im Holz ausreichend große Löcher für die einzuschlagenden Dübel zu schaffen.

Die Unteransprüche 6 - 11 zeigen weitere vorteilhafte Ausgestaltungen bzw. Alternativausführungen des Holzschneidteiles.

Ausführungsbeispiele des erfindungsgemäß ausgebildeten Steinbohres sind in den Zeichnungen dargestellt. Es zeigen:
- Fig. 1 -: einen in der Länge gebrochenen, erfindungsgemäß ausgebildeten Steinbohrer in Seitenansicht,
- Fig. 2 -: A - F Schnittbilder gemäß der Linie II- II in Fig. 1 bei verschiedenen Ausgestaltungen des Holzschneidteiles des Steinbohres gem. Fig. 1.

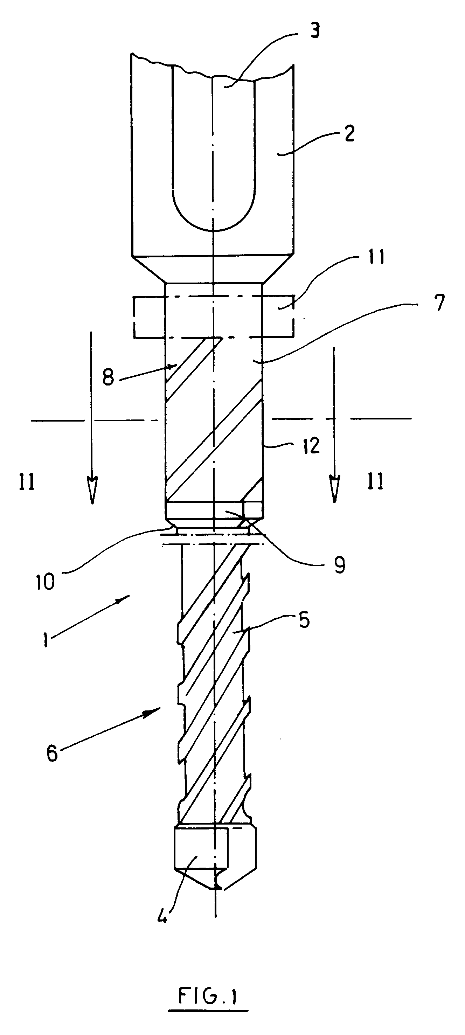

Die Fig. 1 zeigt einen Steinbohrer 1. Solch ein Steinbohrer 1 wird normalerweise dazu benutzt, Holzleisten o.dgl. an Mauerwerk aus Beton, Ziegeln, Stein o.dgl. anzudübeln. Dabei wird mit dem Steinbohrer 1 durch das Holz hindurch in das Mauerwerk gebohrt und anschließend ein Dübel durch das Holz hindurch in das Mauerwerk eingeschlagen und zuletzt eine Schlagschraube eingetrieben.

Der Steinbohrer 1 wird zur Durchführung der vorgenannten Arbeit in eine nicht gezeigte Schlagbohrmaschine eingespannt.

Der Steinbohrer 1 weist zum Einspannen in die nicht gezeigte Schlagbohrmaschine ein Einspannende 2, das nur abgebrochen dargestellt ist auf, welches in seinem Durchmesser der Spannweite der Schlagbohrmaschine angepaßt ist und ggfs. seitliche Mitnehmernuten 3 aufweisen kann. Am anderen Ende hat der Steinbohrer 1 Hartmetallschneiden 4. Auf seiner Länge ist der Steinbohrer 1 mit Spiralnuten 5 versehen.

Die Fig. 1 zeigt, daß die Hartmetall-Schneiden 4 einen etwas größeren Durchmesser haben, als der in Axialrichtung anschließende Bereich. Diese Ausgestaltung ist bei vielen Steinbohrern üblich. Sie verhindert ein Verklemmen bei starkem Bohrabfall.

Erfindungsgemäß ist der Steinbohrer 1 in einen Steinbohrteil 6 und einen Holzschneidteil 7 unterteilt. Der Holzschneidteil hat gegenüber den Hartmetall-Schneiden 4 einen um etwa 8-24% vergrößerten Durchmesser, und er hat zum Schneiden in Holz Flankenschneiden 8. An der Übergangsstelle des Steinbohrteiles 5 in den Holzschneidteil 7 sind zweckmäßig Hartmetall-Schneideinsätze 9 vorgesehen, welche Stirnschneiden 10 haben, die einen stumpfen Winkel miteinander bilden.

Die Spiralnutung des Steinbohrteiles 5 ist durch die Hartmetall-Schneideinsätze 9 hindurch in den Holzschneidteil 7 fortgesetzt.

In strichpunktierten Linien ist in Fig. 1 ein Anschlagring 11 eingezeichnet, der am Ende des Holzschneidteiles 7 und vor dem Einspannende 2 angeordnet ist. Dieser Anschlagring 11 kann fest oder axial verschiebund arretierbar ausgebildet sein und dient zur Begrenzung der Bohrtiefe.

Bei der Ausgestaltung des Holzschneidteiles 7 ist davon ausgegangen, daß Holz ein begrenzt elastisch, nachgiebiger Werkstoff ist, welcher stumpfen Schneiden relativ leicht nachzugeben vermag. Um dennoch im Holz mit dem Holzschneidteil 7 ausreichend große Löcher zu bohren, die ein Setzen von Dübeln gestatten, ist der Holzschneidteil 7 zunächst in der angegebenen Weise um etwa 8-24% gegenüber dem Durchmesser der Hartmetall-Schneiden 4 des Steinbohrteiles 5 vergrößert. Diese Vergrößerung ist aber nicht als massive,ununterbrochene Mantelfläche des Holzschneidteiles 7 zu verstehen, sondern sie definiert eine Zylindermantelfläche 12, in welcher sich die Flankenschneiden 8 mit ihren Schneidkanten 13 befinden. Die übrigen Bereiche sind dagegen mit einem geringeren Durchmesser versehen. Sie erlauben, daß das Holz zwischen den Flankenschneiden 8 über die Zylindermantelfläche 12 hinausdrängt, bzw. in den Wirkbereich der Flankenschneiden 8 kommt.

Für die Ausgestaltung der Schneiden des Holzschneidteiles 7 sind zahlreiche Varianten möglich.

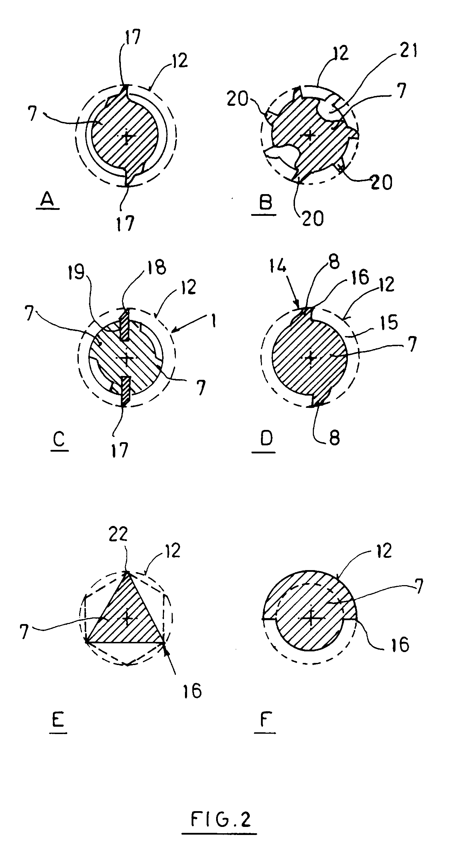

Bei der Ausführung gem. Fig. 2 D ist die Spiralnutung des Holzschneidteiles 7 ausgenutzt, um Flankenschneiden 8 zu bilden, indem die Außenfläche 14, die identisch ist mit der gedachten Zylindermantelfläche 12 und die Flanke des Hohlraumes 15 der Nutung zur Bildung der Flankenschneide ausgenutzt werden, indem die aufeinandertreffenden Flächen zu Schneidkanten 16 ausgebildet und angeschärft sind.

Alternativ dazu kann man gem. Fig. 2 A aber auch nur einen, oder wie die Fig. 2 A zeigt, zwei radial vorspringende Schneiden 17 vorsehen, deren Schneidkanten wiederum in der Zylindermantelfläche 12 liegen.

Die Fig. 2 C zeigt eine Variante, bei welcher geradlinige Schneidleisten 18 in Nute 19 des Holzschneidteiles 19 eingesetzt sind, und zwar so, daß die Schneidkanten wiederum in der gedachten Zylindermantelfläche 12 liegen. Da diese Schneidleisten 18 ggfs. entnehmbar sein können, können sie nachgeschärft werden und es läßt sich eine gute Holzschneidwirkung auf Dauer erzielen.

Bei der Fig. 2 D verlaufen die Schneidkanten 16 aufgrund der Spiralennutung spiralförmig. Der gleiche spiralige Verlauf kann auch den vorspringenden Schneiden 17 gem. Fig. 2 A gegeben werden.

Es ist bekannt, daß mit Holzraspeln sehr gute Effekte erzielt werden. Dieser Erfahrung dient die Variante gem. Fig. 2 B. Bei dieser Variante des Steinbohrers 1 hat der Holzschneidteil 7 eine Vielzahl von zahnförmigen Einzelschneiden 20, deren Schneidkanten wiederum in der gedachten Zylindermantelfläche 12 liegen, während der Kern oder Schaft einen kleineren Durchmesser hat. Zusätzlich ist in Fig. 2 B deutlich zu sehen, daß der Hohlraum 21 der Spiralnutung auch im Holzschneidteil 7 zur Abführung des Bohrabfalles vorgesehen ist.

Eine ganz andere Variante der Gestaltung zeigt die Fig. 2 E. Bei dieser Ausgestaltung ist der Holzschneidteil in seiner Grundform nicht mehr kreisförmig. Gezeigt ist in vollen Linien ein gleichseitiges Dreieck als Querschnitt, dessen Ecken 22 in der gedachten Zylindermantelfläche 12 liegen und als Schneiden wirken. Wie in strichpunktierten Linien angedeutet, können auch sechseckige Querschnitte und andere benutzt werden. Im Extremfall könnte anstelle eines Dreiecks auch ein flach-quaderförmiger Querschnitt benutzt werden, der an seinen beiden kurzen Stirnecken oder -enden, Schneiden bildet.

Die Fig. 2 F zeigt, daß Schneiden 16 auch aus runden Querschnitten gebildet werden können, indem im Querschnittdurchmesser Sprünge geschaffen werden. Bei der Fig. 2 F ist eine Hälfte des Querschnittes gewissermaßen als Schaft mit einem kleineren Durchmesser als die andere Hälfte ausgebildet. Diese andere Hälfte kann massiv der gedachten Zylindermantelfläche 12 folgen, während die erstgenannte, im Durchmesser kleinere Hälfte durch scharfe Stufen mit dieser verbunden ist, so daß sich Schneiden ergeben.

Es gibt zahlreiche andere Varianten, Flankenschneiden 8 zu schaffen, die die Fähigkeit haben, in Holz eine Schneidwirkung zu erzielen.

Bei den Varianten 2 E und 2 F können die Querschnitte über die Länge des Holzschneidteiles 7 hinweg verdrallt sein, und zwar im Sinne der Spiralnutung. Dadurch ergibt sich ein zweifacher Effekt, nämlich einmal der Schneideffekt oder Schneidverbesserungseffekt, den die Spiralnutung erzeugt und weiterhin die Wirkung, daß der Bohrabfall durch die Spiralnutung bzw. den Effekt, den die Verdrallung bewirkt, aus dem Bohrloch ausgetragen wird.

Abweichend von der geschilderten Darstellung kann bei anderen Werkstoffkombinationen auch mit anderen als den dargestellten Querschnittsformen, Durchmessererweiterungen usw. gearbeitet werden.

Die Hartmetallschneideinsätze 9 schonen die Flankenschneiden 8 vor der schmirgelnden Wirkung des Steinbohrabfalles, und sie erzeugen in dem Bohrloch im Mauerwerk eine konische Erweiterung des Locheinganges. Diese konische Erweiterung begünstigt das Einschlagen des Dübels.

Bei einem spezifischen Steinbohrer mit dem Nenndurchmesser 6 mm, der geeignet ist für Dübel mit dem Außendurchmesser 6,25 und dann, wenn Holzleisten o.dgl. in der Stärke von 20 - 25 mm anzudübeln sind, wird der Holzschneidteil 7 um 0,5 - 1,5 mm im Durchmesser dicker ausgebildet und hat eine Länge von 23 mm.

Als Material für den Steinbohrer 1 eignen sich die üblichen verschleißfesten Stähle, Werkzeugstähle o.dgl. Die einzelnen Abschnitte des Steinbohres 1, ausgenommen die Hartmetall-Schneiden 4 und Hartmetall-Schneideinsätze 9, können ggfs. in einem Stück gefertigt werden und anschließend mit den Hartmetallteilen 4 bzw. 9 in der üblichen Weise durch Hartlötung versehen werden. Die Fertigung ist aber auch anders möglich, indem der Steinbohrteil 5 und der Holzschneidteil 7 getrennt gefertigt und durch Hartlötung zusammengefügt werden.

## Patentansprüche

1. Steinbohrer, insbesondere für Schlagbohrmaschinen, der als Spiralbohrer ausgebildet und mit Hartmetall-Schneiden ausgerüstet ist,
dadurch gekennzeichnet,
daß der Bohrer (1) im Anschluß an die Hartmetall-Schneiden (4) einen, ggfs. gegenüber den Hartmetall-Schneiden (4) mit geringerem Durchmesser ausgebildeten Steinbohrteil (5) aufweist, daß zwischen dem Steinbohrteil (5) und einem Einspannende (2) ein Holzschneidteil (7) vorgesehen ist,
und daß der Holzschneidteil (7) gegenüber dem Durchmesser der Hartmetall-Schneiden (4) um ca. 8-24% im Durchmesser vergrößert ist.

2. Steinbohrer nach Anspruch 1,
dadurch gekennzeichnet,
daß die Spiralnutung des Steinbohrteiles (5) stetig durch den Holzschneidteil (7) weiter verläuft.

3. Steinbohrer nach Anspruch 1 und/oder 2,
dadurch gekennzeichnet,
daß der Holzschneidteil (7) am Übergang zum Steinschneidteil (5) Hartmetall-Schneideinsätze (9) aufweist,
und daß die Stirnschneiden (10) der Hartmetall-Schneideinsätze (9) einen stumpfen Winkel bilden.

4. Steinbohrer nach einem oder mehreren der Ansprüche 1 bis 3,
dadurch gekennzeichnet,
daß am Ende des Holzschneidteiles (7) und vor dem Einspannende (2) ein ggfs. axial verschiebbar und arretierbar ausgebildeter Anschlagring (11) als Bohrtiefenbegrenzer vorgesehen ist.

5. Steinbohrer nach einem oder mehreren der Ansprüche 1 bis 4,
dadurch gekennzeichnet,
daß der Holzschneidteil (7) Flankenschneiden (8) aufweist,
und daß die Schneidkanten (16) der Flankenschneiden (8) in der gedachten Zylindermantelfläche (12) des um ca. 8-24% im Durchmesser vergrößerten Holzschneidteiles (7) liegen.

6. Steinbohrer nach einem oder mehreren der Ansprüche 1 bis 5,
dadurch gekennzeichnet,
daß die gegen die Drehrichtung des Bohres (1) weisenden Kanten zwischen Spiralnuten (15) und Zylindermantelfläche (12) als Schneiden (16) ausgebildet sind.

7. Steinbohrer nach einem oder mehreren der Ansprüche 1 bis 5,
dadurch gekennzeichnet,
daß der Holzschneidteil (7) wenigstens eine radial vorspringende Schneide (17) aufweist.

8. Steinbohrer nach Anspruch 7,
dadurch gekennzeichnet,
daß die Schneide (17) an einer geradlinig ausgebildeten Schneidleiste (18) vorgesehen ist, welche in einer Nut (19) des Holzschneidteiles (7) gehalten ist.

9. Steinbohrer nach einem oder mehreren der Ansprüche 1 bis 5,
dadurch gekennzeichnet,
daß die Flankenschneiden (8) aus einer Mehrzahl von zahnförmigen Einzelschneiden (20) bestehen, die nach Art einer Holzraspel über den Umfang des Holzschneidteiles (7) verteilt angeordnet sind.

10. Steinbohrer nach einem oder mehreren der Ansprüche 1 bis 5,
dadurch gekennzeichnet,
daß der Holzschneidteil (7) einen drei- oder mehreckigen Querschnitt aufweist,
und daß die Ecken (22) als Schneidkanten (16) scharf ausgebildet sind.

11. Steinbohrer nach Anspruch 10,
dadurch gekennzeichnet,
daß die Ecken (22) des mehreckigen Querschnitts über die Länge des Holzschneidteiles (7) im Drehsinn der Spiralnute verdrallt sind.

## Claims

1. Stone drill bit, in particular for impact drilling machines, provided as twist drill and fitted with carbide tips,
**characterized in that**
adjacent the carbide tips (4) the drill bit (1) has a stone drill portion (5) that may be of smaller diameter than the carbide tips (4), that a wood cutting portion (7) is provided between said stone drill portion (5) and a chucking end (2) and that the diameter of said wood cutting portion (7) is about 8-24 % larger than that of the carbide tips (4).

2. Stone drill bit as claimed in claim 1, characterized in that the spiral groove of the stone drill portion (5) continuously extends through the wood cutting portion (7).

3. Stone drill bit as claimed in claim 1 and/or 2, characterized in that the wood cutting portioon (7) is provided with carbide tip inserts (9) in the transition area to the stone cutting portion (5) and that the face end cutting edges (10) of the carbide tip inserts (9) are forming an obtuse angle.

4. Stone drill bit as claimed in any of the preceding claims 1 to 3, characterized in that a stop collar (11) to serve as drilling depth limiter that may be axially shiftable and that is arrestable is provided at the end of the wood cutting portion (7) and ahead of the chucking end (2).

5. Stone drill bit as claimed in any of the preceding claims 1 to 4, characterized in that the wood cutting portion (7) is provided with flank cutters (8) and that the cutting edges (16) of said flank cutter are disposed within the ficititious cylindrical generated surface (12) of the wood cutting portion (7) being about 8-24 % larger in diameter.

6. Stone drill bit as claimed in any of the preceding claims 1 to 5, characterized in that the edges facing against the sense of rotation of the drill bit (1) between the spiral grooves (15) and the cylindrical generated surface (12) are provided in the form of cutting edges (16).

7. Stone drill bit as claimed in any of the preceding claims 1 to 5, characterized in that the wood cutting portion (7) has at least one radially projecting cutting edge (17).

8. Stone drill bit as claimed in claim 7, characterized in that the cutting edge (17) is provided on a straight cutter strip body (18) being held in one of the grooves (19) of the wood cutting portion (7).

9. Stone drill bit as claimed in any of the preceding claims 1 to 5, characterized in that the flank cutters (8) consist of a plurality of individual tooth-shaped cutting edges (20) distributed over the circumference of the wood cutting portion (7) similar to a wood rasp.

10. Stone drill bit as claimed in any of the preceding claims 1 to 5, characterized in that the wood cutting portion (7) has a trigonal or polygonal cross-section and that the edges (22) are sharp to serve as cutting edges (16).

11. Stone drill bit as claimed in claim 10, characterized in that the edges (22) of the polygonal cross-section are twisted in the spiral groove sense of rotation over the full length of the wood cutting portion (7).

## Revendications

1. Foret pour la pierre, en particulier pour les perceuses à percussion, ayant la forme d'un foret hélicoïdal et équipé de tranchants en métal dur,
caractérisé par le fait
que la tarière (1) présente, dans le prolongement des tranchants en métal dur (4), une mèche à pierre (5) dont le diamètre est le cas échéant inférieur à celui des tranchants en métal dur (4), qu'entre la mèche à pierre (5) et une fixation (2), il est prévu une mèche à bois (7)
et que la mèche à bois (7) a un diamètre supérieur d'environ 8 à 24% par rapport au diamètre des tranchants en métal dur (4).

2. Foret pour la pierre d'après la revendication 1,
caractérisé par le fait
que la rainure hélicoïdale de la mèche à pierre (5) se prolonge de manière continue dans le foret à bois (7).

3. Foret pour la pierre d'après la revendication 1 et/ou 2,
caractérisé par le fait
que la mèche à bois (7) présente des inserts de coupe en métal dur (9) à l'endroit de sa jonction avec la mèche à pierre (5),
et que l'attaque des tranchants (10) des inserts de coupe en métal dur (9) forme un angle obtus.

4. Foret pour la pierre d'après une ou plusieurs des revendications 1 à 3,
caractérisé par le fait
qu'à l'extrémité de la mèche à bois (7) et avant la fixation (2), il est prévu un anneau d'arrêt (11) à déplacement axial pouvant être bloqué et servant à limiter la profondeur du forage.

5. Foret pour la pierre d'après une ou plusieurs des revendications 1 à 4,
caractérisé par le fait
que la mèche à bois (7) présente des tranchants hélicoïdaux (8)
et que les arêtes coupantes (16) des tranchants hélicoïdaux (8) se trouvent dans la surface idéale du manchon du cylindre (12) de la mèche à bois (7) au diamètre supérieur d'environ 8-24%.

6. Foret pour la pierre d'après une ou plusieurs des revendications 1 à 5,
caractérisé par le fait
que les arêtes orientées en sens inverse du sens de rotation du foret (1) entre les rainures hélicoïdales (15) et la surface du manchon du cylindre (12) forment des tranchants (16).

7. Foret pour la pierre d'après une ou plusieurs des revendications 1 à 5,
caractérisé par le fait
que la mèche à bois (7) présente au moins un tranchant latéral saillant (17).

8. Foret pour la pierre d'après la revendication 7,
caractérisé par le fait
que le tranchant (17) est prévu sur une barre de coupe droite (18) tenue dans une rainure (19) de la mèche à bois (7).

9. Foret pour la pierre d'après une ou plusieurs des revendications 1 à 5,
caractérisé par le tait
que les tranchants hélicoïdaux (8) sont composés de plusieurs tranchants individuels dentiformes (20) disposés à la manière d'une râpe à bois sur l'ensemble de la mèche à bois (7).

10. Foret pour la pierre d'après une ou plusieurs des revendications 1 à 5,
caractérisé par le fait
que la mèche à bois (7) présente une section tri- ou multiangulaire
et que les angles (22) sont aiguisés pour former des arêtes tranchantes (16).

11. Foret pour le bois d'après la revendication 10,
caractérisé par le fait
que les angles (22) de la section multiangulaire sont toronnés sur la longueur de la mèche à bois (7) dans le sens de rotation de la rainure hélicoïdale.
